Europäisches Patentamt

European Patent Office

Office européen des brevets

(19)

(11) Veröffentlichungsnummer : **0 150 267**
**B1**

(12) **EUROPÄISCHE PATENTSCHRIFT**

(45) Veröffentlichungstag der Patentschrift :
15.06.88

(51) Int. Cl.⁴ : **A 01 C   1/02, A 01 G   9/10**

(21) Anmeldenummer : **84111460.6**

(22) Anmeldetag : **26.09.84**

(54) Schale zur Anzucht von Samen.

(30) Priorität : **14.01.84 DE 8401020 U**

(43) Veröffentlichungstag der Anmeldung :
**07.08.85 Patentblatt 85/32**

(45) Bekanntmachung des Hinweises auf die Patenterteilung : **15.06.88 Patentblatt 88/24**

(84) Benannte Vertragsstaaten :
**AT BE CH DE FR GB IT LI LU NL SE**

(56) Entgegenhaltungen :
**DE-A- 2 017 100**
**DE-A- 2 141 201**
**DE-C-   608 344**
**DE-U- 7 333 047**

(73) Patentinhaber : **FLORA Frey GmbH & Co. KG**
**Focher Strasse 30-34**
**D-5650 Solingen 16 (DE)**

(72) Erfinder : **Mütze, Jost**
**Wiedenkamper Strasse 29**
**D-5650 Solingen 19 (DE)**

(74) Vertreter : **Rieder, Hans-Joachim, Dr. et al**
**Corneliusstrasse 45 Postfach 11 04 51**
**D-5600 Wuppertal 11 (DE)**

## Beschreibung

Die Erfindung betrifft eine Schale zur Anzucht von Pflanzen, mit einem wannenförmigen Unterteil und mit einem durch Randauflage hängend in dieses hineinragenden Oberteil, dessen Boden als Sieb gestaltet ist und mit einer randseitigen, zum Unterteil hin offenen Flüssigkeitsnachfüllöffnung.

Bei den bekannten Lösungen dieser Art (DE-A-20 17 100) ist die Flüssigkeitsnachfüllöffnung in Form einer über den eigentlichen Grundriss der Schale vorstehenden Schnauze gebildet, die noch eine teilweise ausgeschnittene, stegförmig auskragende Rippe gebildet. Dies ist gießtechnisch und verpackungstechnisch von Nachteil. Will man entsprechende Anzuchtschalen in üblichen Kartons mit rechteckigem Grundriss verpacken, entsteht ein nicht unerhebliches Leervolumen. Auch ist die Beschädigungsgefahr durch Abbrechen der vorstehenden Teile groß. Gießtechnisch liegt der Nachteil vor, daß bei möglichst geringem Überstand der so gebildeten Schnauze das Eingießen schwierig wird, weil man gegen die Wände der Näpfe des Oberteils gießt.

Aus der DE-U-7 333 047 ist es bekannt, in einem Hydrokulturgefäß im Eckbereich zwischen diesem und einem in das Gefäß hineinragenden Einsatz an letzterem eine Einziehung zu formen, die somit ein Loch läßt zum Einsetzen eines Wasserstandanzeigeröhrchens. Dessen bodenseitige Lagesicherung bildet ein dem Boden des Gefäßes angeformter Kragen. Der Einsatz weist im Übergangsbereich zwischen Boden und Einsatzwandung Wasserdurchtrittsschlitze auf, so daß das in den Träger eingegossene Gießwasser auch in den Zwischenraum zum umgebenden Gefäß gelangen kann. Außer einer schmalen Spaltfuge bleibt zwischen beiden Bauteilen kein Gießraum.

Durch die DE-C-608 344 ist ein solcher Ringspalt zwar grösser ausgebildet. Dort handelt es sich jedoch um ein Hyazinthengefäß. Zur Anzucht von Pflanzen aus Sämlingen ist dieses Gefäß nicht geeignet. Der Ringspalt ist in Umfangsrichtung mehrfach unterbrochen und dient als Luftspalt.

Aufgabe der vorliegenden Erfindung ist es, eine gattungsgemäße Schale so auszugestalten, daß bei herstellungstechnisch einfacher Bauform neben der pflegetechnischen, d. h. vor allem gießtechnischen Verbesserung gleichzeitig eine gebrauchsvorteilhaftere Lösung vorliegt, insbesondere im Hinblick auf die Stapelbarkeit, z. B. zwecks Versandes.

Gelöst ist diese Aufgabe durch die im kennzeichnenden Teil des Hauptanspruches angegebene Erfindung.

Die Unteransprüche stellen vorteilhafte Weiterbildungen des Erfindungsgegenstandes dar.

Zufolge solcher Ausgestaltung ist eine gattungsgemäße Anzuchtschale von insbesondere erhöhtem Gebrauchswert geschaffen :

Die Flüssigkeitsnachfüllöffnung ist in den eigentlichen Grundriss des Unterteils der Schale integriert. Sie steht über diesen Rechteckgrundriss nicht über. So liegen auch keine abbruchgefährdeten Partien vor. Die Schale läßt sich daher sogar aus leichterem Werkstoff herstellen und auch raumsparender verpacken. Trotzdem kann die Flüssigkeitsversorgung gezielt und schnell über die zum Unterteil hin offene Flüssigkeitsnachfüllöffnung erfolgen. Übernässte Zonen sind so vermieden. Die Anzucht ist effektiver. Die pyramidenstumpfförmige Gestalt des Oberteiles und Unterteiles ist in vieler Hinsicht von Bedeutung : Sie läßt sich nicht nur günstig für die exakte Lagezentrierung nutzen, sondern vermeidet auch ein Verkratzen der in der Regel aus Klarsicht-Kunststoff bestehenden Teile, wozu hier unterschiedliche Neigungswinkel der Pyramidenstumpfwände gewählt sind. Ferner ergibt sich durch die pyramidale Grundform eine optimale Voraussetzung für die pflegetechnische Seite, indem die von einer einwärtsgerichteten Wand-Einbuchtung des Oberrandes gebildete Flüssigkeitsnachfüllöffnung oberhalb der im Bodenunterteil unterhalb der Flüssigkeitsnachfüllöffnung angeordneten, wanneneinwärts gerichteten Wand-Einziehung liegt, die eine gegenüber der Bodenfläche des Unterteils erhöht liegende Stufe bildet, welche im Grundriss der Form der Flüssigkeitsnachfüllöffnung angepasst ist. Die Zugänglichkeit zum Begießen ist selbst in gestapeltem Zustand gegeben, was beispielsweise in den ersten Tagen der Anzucht eine günstige raumsparende Aufstellung ermöglicht. Die wanneneinwärts gerichtete Wand-Einziehung schafft den notwendigen Freiraum. Die Wandeinbuchtung erfüllt eine zusätzliche Funktion dergestalt, daß das Gießwasser nicht über die ganze Höhe des Unterteils in dieses hineinplatscht und die dortigen Keimlinge aus ihrer Lage wirft. Vielmehr ergibt sich ein schonendes, kaskadenartig gebremster Gießstrom zufolge des dort mehrfach abgewinkelten Wandungsverlaufes. Weiter läßt sich die mit dem Oberteil versehene Anzuchtschale sehr gut verkaufsgerecht stapeln und raumsparend verpacken. Diesbezüglich wirkt sich auch eine vorteilhafte Ausgestaltung dahingehend positiv aus, daß die Einbuchtung symmetrisch zur Längsmittelachse liegt. Die Stapelbildung ist vor allem narrensicher. Endlich besteht noch eine günstige Maßnahme darin, daß der Boden des Oberteils nach oben vorstehende Rippen aufweist, deren Stirnenden jeweils einen lichten Abstand belassen, welcher dem Außenmaß des Bodens des Unterteils an dieser Stelle entspricht, und daß eine Schnapp/Rastverbindung zwischen Oberteil und Unterteil vorgesehen ist. Die entsprechend erreichte passgerechte Zuordnung trotz im Grunde unterschiedlicher Basisflächen läßt größte Stapelhöhen erreichen. Um den verbleibenden Ringraum nicht dem Verstauben auszusetzen, kann der Stapel auf den Kopf gestellt werden, d. h. das eingesetzt Oberteil weist nach unten. Damit trotzdem ein bequemes Entnehmen der kompletten Anzucht-Schalen möglich ist, sind in vorteilhafter Weise Oberteil und Unterteil durch die erwähnte Schnapp/Rastverbindung aneinander gehalten.

Der Gegenstand der Erfindung ist nachstehend anhand eines zeichnerisch veranschaulichten Ausführungsbeispiels näher erläutert. Es zeigt

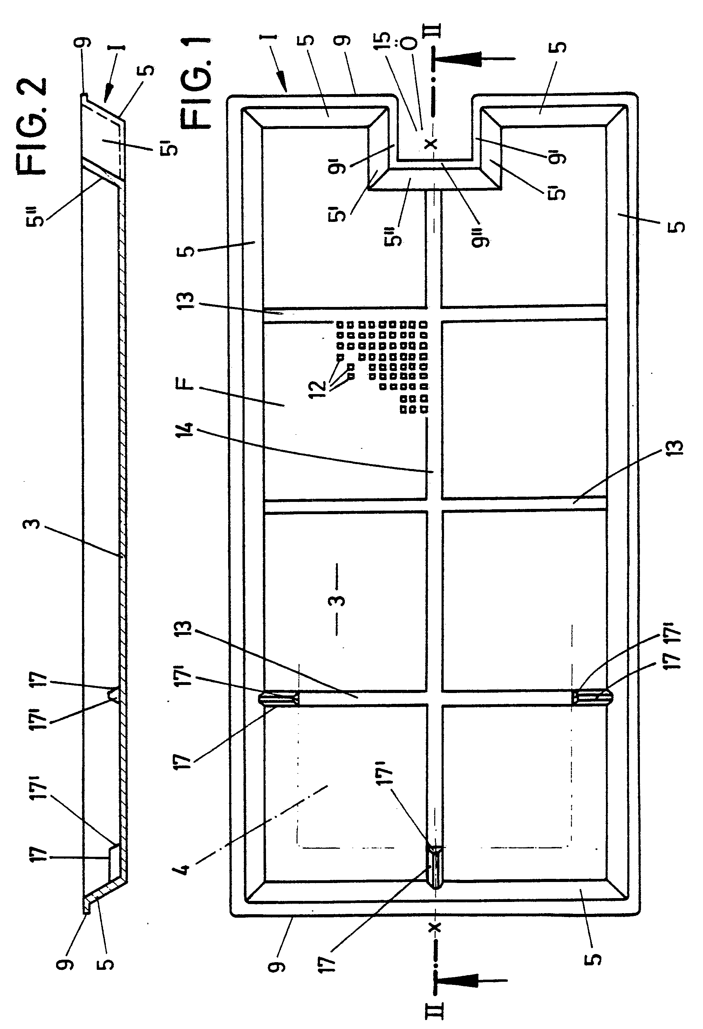

Fig. 1 die Draufsicht auf das Oberteil der Schale,

Fig. 2 den Schnitt gemäß Linie II-II in Fig. 1,

Fig. 3 die Draufsicht auf das Unterteil der Schale,

Fig. 4 den Schnitt gemäß Linie IV-IV in Fig. 3,

Fig. 5 einen Längsschnitt durch einen Stapel kompletter Anzuchtschalen und

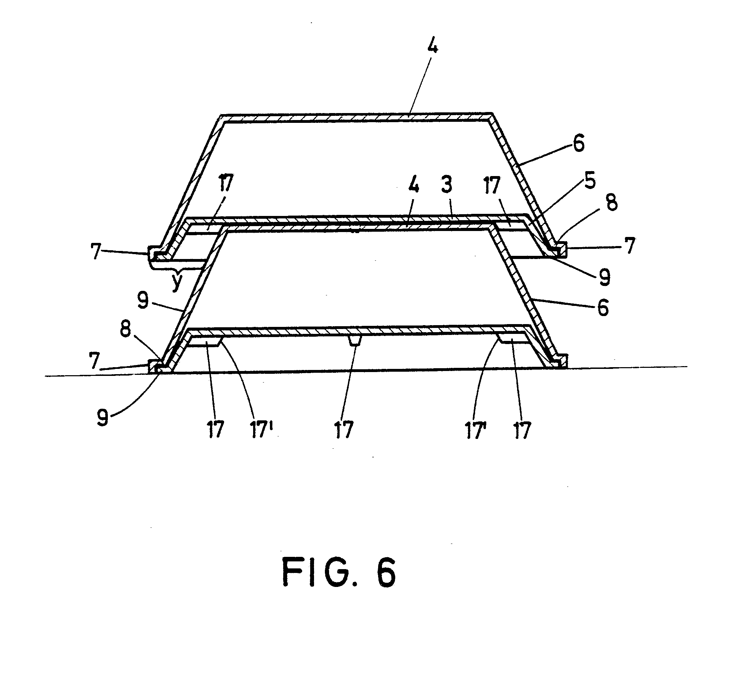

Fig. 6 den Schnitt gemäß Linie VI-VI in Fig. 5.

Die Schale zur Anzucht von Samen besteht aus einem Oberteil I und einem Unterteil II. Beide sind lang rechteckigen Grundrisses und bspw. aus Klarsicht-Kunststoff gespritzt. Sie weisen Wannenform auf, d. h. ihre einander gegenüberliegenden Wände konvergieren in Richtung des Bodens 3 bzw. 4.

Die Neigung der Wände 5 des Oberteils I beträgt ca. 27°; die Neigung der Wände 6 des Unterteils II beträgt ca. 25°.

Das Unterteil II weist etwa die vierfache Höhe des Oberteils I auf. Letzteres ist in das Unterteil II eingehängt. Der Rand 7 des Unterteils II bildet dazu eine Einlagerungsstufe 8 für einen auswärts gerichteten Randflansch 9 des Oberteils I aus. Die Einlagerungstiefe entspricht der Dicke des Randflansches 9, so daß die nach oben gerichtete, umlaufende, in den Ecken gerundete Stirnkante 10 des Randes 7 oben ebenengleich mit der Oberseite des Randflansches 9 abschließt.

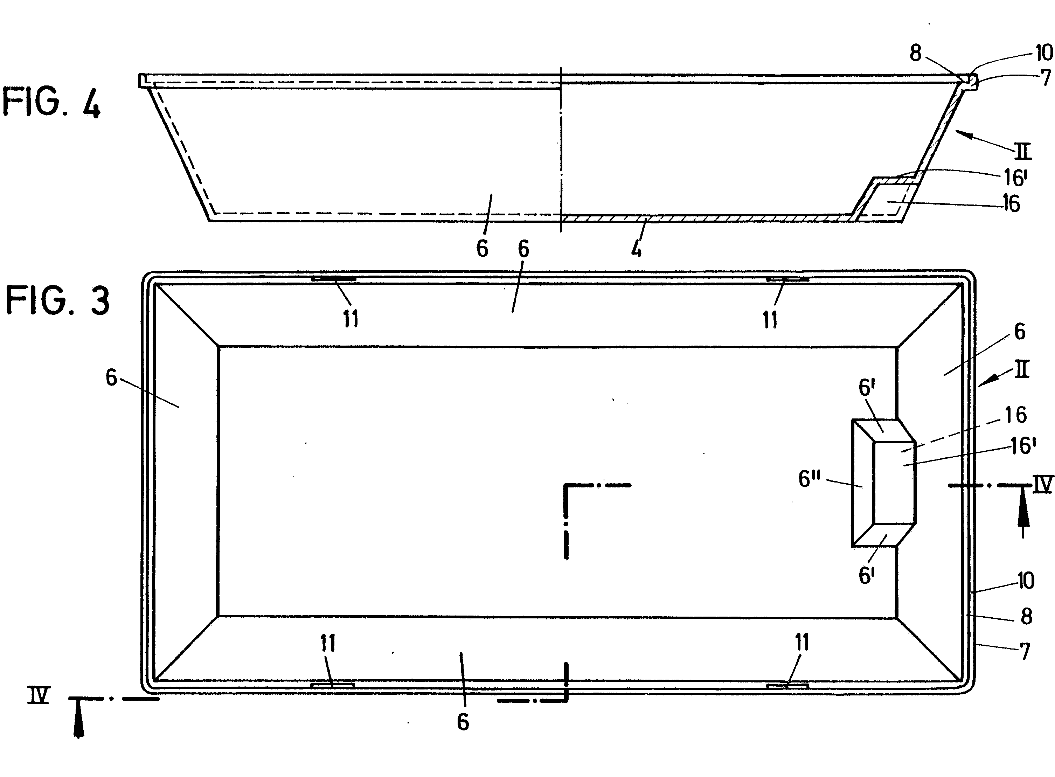

Etwas oberhalb der Einlagerungsstufe 8 gehen innenseitig des Randes 7 im Bereich der längeren Wände 6 des Unterteils II im Abstand von den Ecken und zueinander Rastvorsprünge 11 aus (vergl. Fig. 3), welche mit randflanschseitigen Rastvertiefungen oder Hinterschneidungen des Oberteils I zusammenwirken.

Der Boden 3 des Oberteils I ist als Sieb gestaltet. Die einzelnen Siebfelder sind mit F bezeichnet, die quadratischen Sieb-Löcher mit 12. Insgesamt weist der Boden 3 acht Felder F auf. Die siebfreien Partien erscheinen als Querstege 13 und als ein in der Längsmittelachse x-x der Anzucht-Schale verlaufender Längssteg 14. Die Außenränder der Felder F gehen unmittelbar in die ansteigenden Wände 5 über.

Die beiden rechtsseitigen Felder sind flächenmäßig etwas kleiner. Dort bildet das Oberteil I randseitig eine zum Unterteil II hin offene Flüssigkeitsnachfüllöffnung Ö aus. Letztere ist in Form einer randseitigen Einziehung 15 gestaltet. Der Flanschrand 9 geht (allerdings flanschlos) in zwei parallel sowie symmetrisch zur Längsmittelachse x-x verlaufende Randabschnitte 9' in den parallel zur dortigen kürzeren Wand 5 verlaufenden Randabschnitt 9" über, von welchen die nach unten anschließenden, entsprechenden Wandabschnitte 5' und 5" ausgehen, die bodenseitig sodann in den horizontalen Boden 3 auslaufen. Die Neigung der Wandabschnitte entspricht im wesentlichen der ihnen gegenüberliegenden Wände 5, mit denen sie nach unten hin konvergieren.

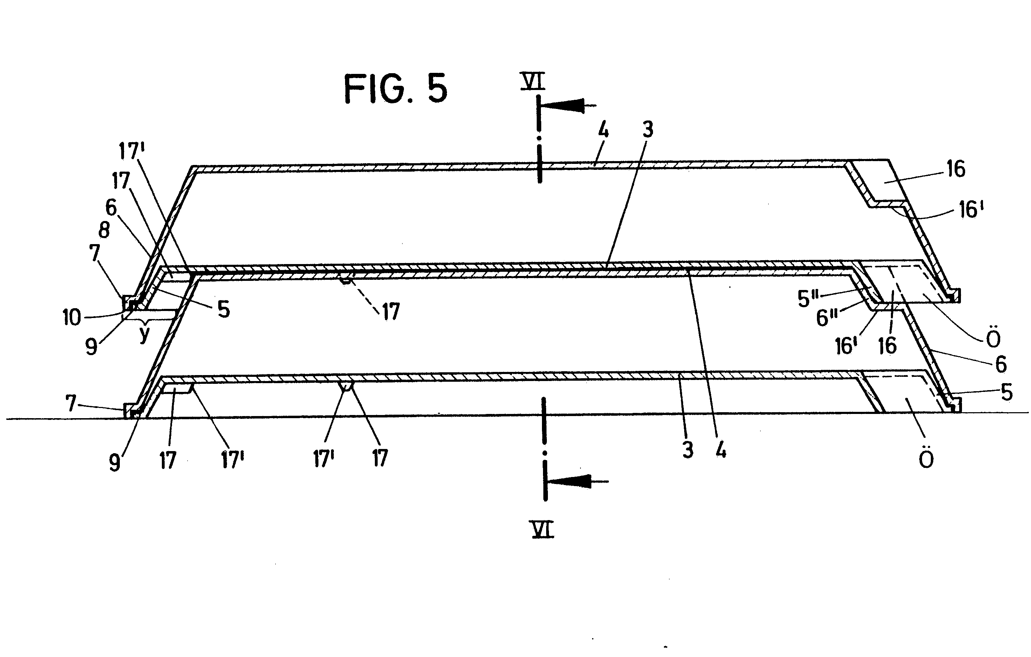

Das Unterteil II weist, ebenfalls im Bereich seiner kürzeren Wand 6, eine wanneneinwärts gerichtete Nische 16 auf. Deren Wandabschnitte 6' sowie der parallel zum Rand 7 des Unterteils II verlaufende Wandabschnitt 6" nehmen einen der Form der Nachfüllöffnung, d. h. der Einziehung 15 angepaßten Verlauf. Die Einziehung kann so als Zentrierhöhlung bei der Schalen-Stapelbildung dienen (vergl. Fig. 5), in welcher Höhlung die Einziehung 15 als Steckvorsprung eingreift. Da der Grundriß des Bodens 4 des Unterteils II deutlich flächenkleiner ist als der des Bodens 3 des Oberteils I, sind auch im der Flüssigkeitsnachfüllöffnung Ö gegenüberliegenden Randbereich Distanzmittel vorgesehen. Der Boden 3 des pyramidenstumpfförmigen Oberteils I weist hierzu unter Zugrundelegung der Gebrauchsstellung nach oben vorstehende, gemäß der Unterteilung in die einzelnen Felder F angeordnete Rippen 17 auf. Zwei Rippen liegen auf Höhe des Querstegs 13, eine im Längssteg 14. Sämtliche Rippen 17 wurzeln in den Wänden 5. Ihre einwärts weisenden Stirnenden 17' belassen jeweils einen lichten Abstand, welcher dem Außenmaß des Bodens 4 des Unterteils II an diesen Stellen entspricht. So verbleibt allseitig ein gleich breiter Überstand y zwischen der überfangenden und überfangenen Schale (vergl. Fig. 5). Zusammen mit den drei Rippen 17 in dem einen Endbereich der Schale und dem Zentrierungs-Ineinandergriff von Einziehung 15 und Nische 16 im anderen Endbereich liegen insgesamt vier Stützzonen vor.

Die vertikale Höhe der Nische 16 berücksichtigt die Höhe der vorsprungbildenden, eintauchenden Einziehung 15, so daß die Böden 3, 4 berührend aufeinanderliegen. Ein Verkratzen der berührenden Stellen der Schalen scheidet zufolge der Distanzmittel aus; die Ware bleibt selbst nach längeren Bereitstellungszeiten ansehnlich.

Ordnet man den nischenbildenden Abschnitt unterhalb der Flüssigkeitsnachfüllöffnung Ö an, so dient deren dann der Öffnung zugewandte Oberseite 16' gleichsam als die einzuschüttende Flüssigkeit verteilende Prallwand.

Die Höhe der im Querschnitt trapezförmigen Rippen 17 kann sehr gering gehalten sein. Ihre dem Neigungsverlauf der Wände 6 angepaßte Stirnschrägung wirkt, wie auch die der Wandabschnitte 5", zentrierend.

Die Teile I und II können auch je für sich gestapelt werden (nicht dargestellt).

**Patentansprüche**

1. Schale zur Anzucht von Pflanzen, mit einem wannenförmigen Unterteil (II), mit einem durch Randauflage hängend in dieses hineinragenden Oberteil (I), dessen Boden als Sieb gestaltet ist, und mit einer randseitigen, zum Unterteil (II) hin offenen Flüssigkeitsnachfüllöffnung (Ö), dadurch gekennzeichnet, daß Ober- und Unterteil (I/II) als Pyramidenstümpfe mit unterschiedlichem Neigungswinkel der Pyramidenstumpfwände (5, 6) gestaltet sind und die von einer einwärts gerichteten Wand-Einbuchtung (15) des Oberrandes gebildete Flüssigkeitsnachfüllöffnung (Ö) oberhalb einer im Boden (4) des Unterteiles (II) unterhalb der Flüssigkeitsnachfüllöffnung (Ö) angeordneten, wanneneinwärts gerichteten Wand-Einziehung (16) liegt, die eine gegenüber der Bodenfläche (4) des Unterteiles (II) erhöht liegende Stufe bildet, welche im Grundriß der Form der Flüssigkeitsnachfüllöffnung (Ö) angepasst ist.

2. Schale nach Anspruch 1, dadurch gekennzeichnet, daß die Einbuchtung (15) symmetrisch zur Längsmittelachse (x-x) liegt.

3. Schale nach Anspruch 1, dadurch gekennzeichnet, daß der Boden (4) des Oberteiles (I) nach oben vorstehende Rippen (17) aufweist, deren Stirnenden (17') jeweils einen lichten Abstand belassen, welcher dem Außenmaß des Bodens (4) des Unterteiles (II) an dieser Stelle entspricht, und daß eine Schnapp/Rastverbindung zwischen Oberteil (I) und Unterteil (II) vorgesehen ist.

## Claims

1. Bowl for cultivating plants, comprising a tub-shaped lower part (II), an upper part (I) which protrudes into this lower part (II) in a suspended manner as a result of support at the periphery and whose base is configured as a sieve, and a peripheral liquid-refill opening (Ö) open towards the lower part (II), characterized in that the upper and lower part (I/II) are configured as truncated pyramids having walls (5, 6) with a different angle of slope, and the liquid-refill opening (Ö) formed by an inwardly directed wall recess (15) of the upper periphery lies above a wall indentation (16) which is arranged in the base (4) of the lower part (II) below the liquid-refill opening (Ö), is directed towards the inside of the tub and forms a step which is raised relative to the base surface (4) of the lower part (II) and in plan form is adapted to the shape of the liquid-refill opening (Ö).

2. Bowl according to Claim 1, characterized in that the recess (15) is symmetric to the longitudinal centre axis (x-x).

3. Bowl according to Claim 1, characterized in that the base (4) of the upper part (I) has upwardly protruding ribs (17) whose front ends (17') each leave a clear distance which corresponds to the external size of the base (4) of the lower part (II) at this location, and that a snap-catch connection is provided between the upper part (I) and the lower part (II).

## Revendications

1. Bac pour cultiver des plantes, comportant une partie inférieure (II) en forme de cuve, une partie supérieure (I) pénétrant dans celle-ci en étant suspendue par un appui de bord, et dont le fond est réalisé sous forme de tamis, avec un orifice (Ö) pour remplir de liquide, ouvert vers la partie inférieure (II), bac caractérisé en ce que les parties supérieure et inférieure (I/II) sont réalisées sous la forme de pyramides tronquées présentant des angles d'inclinaison différents des parois (5, 6) de ces pyramides tronquées, et en ce que l'orifice (Ö) pour remplir de liquide, formé par une échancrure de parois (15) du bord supérieur dirigée en-dedans, est situé au-dessus d'une partie de paroi (16) refoulée vers l'intérieur de la cuve, cette partie étant ménagée dans le fond (4) de la partie inférieure (II) au-dessous de l'orifice (Ö) pour remplir de liquide, et formant un gradin surélevé par rapport à la surface du fond (4) de la partie inférieure (II), ce gradin étant adapté, dans une vue en plan, à la forme de l'orifice (Ö) pour remplir de liquide.

2. Bac selon la revendication 1, caractérisé en ce que l'échancrure (15) est située symétriquement par rapport à l'axe médian longitudinal (x-x).

3. Bac selon la revendication 1, caractérisé en ce que le fond (3) de la partie supérieure (I) est pourvu de nervures (17) faisant saillie vers le haut, et dont les extrémités frontales (17') laissent chaque fois un intervalle libre qui correspond à cet endroit à la dimension extérieure du fond (4) de la partie inférieure (II), et en ce qu'il est prévu une liaison par encliquetage/crantage entre la partie supérieure (I) et la partie inférieure (II).

FIG. 2

FIG. 1

0 150 267

FIG. 4

FIG. 3

0 150 267

FIG. 5

FIG. 6